Europäisches Patentamt

European Patent Office

Office européen des brevets

(11) Veröffentlichungsnummer: **0 247 495**
A2

(12) # EUROPÄISCHE PATENTANMELDUNG

(21) Anmeldenummer: **87107249.2**

(51) Int. Cl.⁴: **A 45 D 20/12, A 45 D 20/30**

(22) Anmeldetag: **19.05.87**

(30) Priorität: **26.05.86 DE 3617684**

(43) Veröffentlichungstag der Anmeldung: **02.12.87**
**Patentblatt 87/49**

(84) Benannte Vertragsstaaten: **AT CH ES FR GB IT LI**

(71) Anmelder: **Braun Aktiengesellschaft, Rüsselsheimer Strasse 22, D-6000 Frankfurt/Main (DE)**

(72) Erfinder: **Voigt, Gottfried, Narzissenstrasse 17, D-6000 Frankfurt am Main 56 (DE)**

(54) **Elektrisches Gerät für den persönlichen Bedarf.**

(57) Der Elektromotor (4) eines Haartrockners ist mit einem gestanzten metallischen Träger (60) versehen, der zur Vormontage einer Diodenbrückenschaltung, sowie von Kohle (30) und Feder (80) für den Elektromotor (4) dient. Der Träger (60) kann mit den vormontierten Teilen in ein Lagerschild (42) des Elektromotors (4) eingesetzt werden, das hierzu mit entsprechenden Aussparungen versehen ist. Die gesamte Baugruppe lässt sich dann auf einfache Weise auf den Kollektor (100) des im Gehäuse (2) des Haartrockners vorgesehenen Elektromotors (4) aufschieben.

05261 PT5/Do
07.05.1986

**0 247 495**

<u>Elektrisches Gerät für den persönlichen Bedarf</u>

Die Erfindung bezieht sich auf ein elektrisches Gerät, insbesondere für den persönlichen Bedarf, mit einem in einem Gehäuse gelagerten, über Gleichstrom betreibbaren, ein Lagerschild aufweisenden Elektromotor, der über auf einem Träger angeordnete Dioden mittel- oder unmittelbar an ein Wechselstromnetz anschließbar ist.

Es ist bereits ein Haartrockner mit einem Gleichstrommotor bekannt (Schweizerische Patentschrift 588835), der von einem Lagerschild getragen wird und dem die Dioden auf einer getrennten Platine zugeordnet sind. Das Lagerschild des Elektromotors, das zur Aufnahme von Kohle und Feder dient, ist derart ausgebildet, daß die Platine an anderer Stelle im Gehäuse des Haartrockners untergebracht ist, so daß die Montage des Elektromotors in dem Lagerschild und der Anschluß der Dioden an den Elektromotor sehr aufwendig und somit teuer ist. Außerdem beansprucht eine derartige Anordnung sehr viel Platz.

Demgegenüber liegt der Erfindung die Aufgabe zugrunde, die Dioden oder die Dioden und die Kohlen für den Elektromotor derart anzuordnen, daß sie relativ leicht montiert bzw. vormontiert werden und mit einem Minimum an Platz auskommen können. Die Aufgabe ist durch die in Anspruch 1 aufgeführten Merkmale gelöst. Durch die vorteilhafte Anordnung der Dioden auf dem Träger und durch die Integrierung des Trägers in das Lagerschild zur Aufnahme des Motors, wird der Platzbedarf für diese Bauteile auf ein Minimum reduziert und auch die Montagezeit erheblich verkürzt. Somit erhält man eine sehr kostengünstige Anordnung. Ein weiterer Platz zum Einbau der Dioden kann auch dadurch eingespart werden, daß sie zumindest einen Teil des Elektromotors bzw. des Kollektors koaxial umgeben, und daß die Dioden sowie die Kohlen in etwa einer Ebene angeordnet sind. Durch andere konstruktive Gegeben-

...

0 247 495
05261 PT5/Do
07.05.1986

heiten, beispielsweise beim Einsatz von an Blattfedern angebrachten Kohlen, kann sich jedoch auch eine Anordnung von Dioden und Kohlen in zwei Ebenen als günstig erweisen.

In vorteilhafter Weise ist der Träger zur Aufnahme der Dioden auch so ausgebildet, daß er gleichzeitig die Kohlen und auch die entsprechende Feder aufnehmen kann. Somit lassen sich alle Dioden beispielsweise einer Brückenschaltung auf dem Träger vormontieren, so daß sie dann als vormontierte Baugruppe in das Lagerschild eingeführt werden können. Hierbei umgeben die Dioden koaxial Teile bzw. die Welle oder den Kollektor des Motors. Der Träger zur Aufnahme der Dioden besteht aus mehreren, über Stege miteinander verbundenen Platten bzw. Bauteilen, in deren Bohrungen die Leitungen der Dioden eingesteckt werden können. Nach dem Einsteckvorgang lassen sich die Dioden mit der Platte auf einfache Weise verlöten. Alternative Befestigungsmöglichkeiten der Dioden bestehen darin, die Dioden abzulängen, die Diodenanschlüsse in muldenförmige Ausformungen an den Platten einzubringen und eine stabile Verbindung durch Löten, Klemmen oder Schweißen herzustellen. Zwei gegenüberliegende Platten zur Aufnahme der Dioden sind darüber hinaus zu einem Gehäuse geformt, so daß es auch zur Aufnahme der Kohle mit der zugehörigen Feder dient. Das Gehäuse zur Aufnahme der Kohle ist U-förmig ausgebildet und weist an seinem Boden je einen Steg auf, der vor der Montage in der gleichen Ebene wie der Boden verläuft. Nach dem die Kohle und Feder in das Gehäuse eingesetzt worden sind, läßt sich der Steg an die Außenseite des Gehäuses heranführen, so daß das Gehäuse nach außen verschlossen ist.

Eine gute Aufteilung der Platten erhält man dadurch, daß jeweils zwei Platten diametral gegenüber angeordnet sind und in entsprechende im Lagerschild vorgesehene Aussparungen einsetzbar sind. Das Gehäuse zur Aufnahme der Kohle und der Feder wird durch das

...

0 247 495
05261 PT5/Do
07.05.1986

im Lagerschild vorgesehene Gegenstück, das ebenfalls als U-förmiges Gehäuse ausgebildet ist, vervollständigt. Hierzu wird bei dem Einbau des Trägers in das Lagerschild das U-förmige Gehäuse des Trägers auf das U-förmige Gehäuse des Lagerschildes gestülpt und somit das Gehäuse auf einfache Weise vervollständigt. Durch diese Anordnung erhält man auch eine gute Abstützung des Trägers im Lagerschild, so daß das Lagerschild sowie der Träger sich auf einfache Weise als Baugruppe vormontieren lassen können.

Das Lagerschild besteht in vorteilhafter Weise aus einem im wesentlichen ringförmigen Körper mit einem Lager, das über vier kreuzartig angeordnete Stege mit dem Ringkranz verbunden ist. Auf den Stegen des Lagerschildes können kleine verformbare Zapfen vorgesehen sein, die in in dem Träger vorgesehene Bohrungen einrasten, um somit nach ihrer Verformung eine Sicherung des Trägers im Lagerschild zu gewährleisten. Nach dem der Träger mit den zugehörigen Dioden im Lagerschild eingebaut ist, lassen sich die die Platten miteinander verbindenden Stege trennen, da nunmehr die Dioden zum Teil die Funktion der Stege übernehmen und somit dem Träger die notwendige Stabilität verleihen. Die die Platten verbindenden Stege dienen somit zur Montageerleichterung der Dioden auf dem Träger. Die vorteilhafte Ausbildung des Trägers ermöglicht auch eine automatische Bestückung mit den vier Dioden in einer Brückenschaltung, so daß die Fertigungszeit zur Montage der Dioden und der zugehörigen Kohlen und Federn auf ein Minimum reduziert werden kann. Da die Längsachse der Dioden parallel zur Längsachse der Stege verläuft, die die einzelnen Platten miteinander verbinden, können nach Durchtrennen der Stege die Dioden auf einfache Weise die Funktion der Stege übernehmen.

Vorteilhaft ist es ferner, daß an mindestens zwei gegenüberliegenden Platten Stege vorgesehen sind, die zum Anschluß der einzelnen Eingänge dienen. Weitere Stege bilden mit dem Ringkörper

...

05261 PT5/Do
07.05.1986

**0 247 495**

des Lagerschildes vier Öffnungen, die auf einfache Weise zur Aufnahme der Dioden dienen, so daß hierdurch zusätzlich Platz eingespart werden kann.

Die letzteren und weiteren ausgestalteten Merkmale der Erfindung sind Gegenstand der Unteransprüche.

Im folgenden wird die Erfindung anhand von lediglich einen Ausführungsweg darstellenden Zeichnungen näher erläutert. Es zeigen:

Fig. 1   einen Schnitt entlang B-B gemäß Fig. 3 durch ein Gehäuse mit einem Lagerschild zur Aufnahme des Elektromotors,

Fig. 2   einen Schnitt entlang A-A gemäß Fig. 3,

Fig. 3   eine Draufsicht des Lagerschildes und des Trägers zur Aufnahme von Dioden,

Fig. 4   eine schematische Darstellung des Stromlaufplanes des Elektromotors und der zugehörigen Heizung.

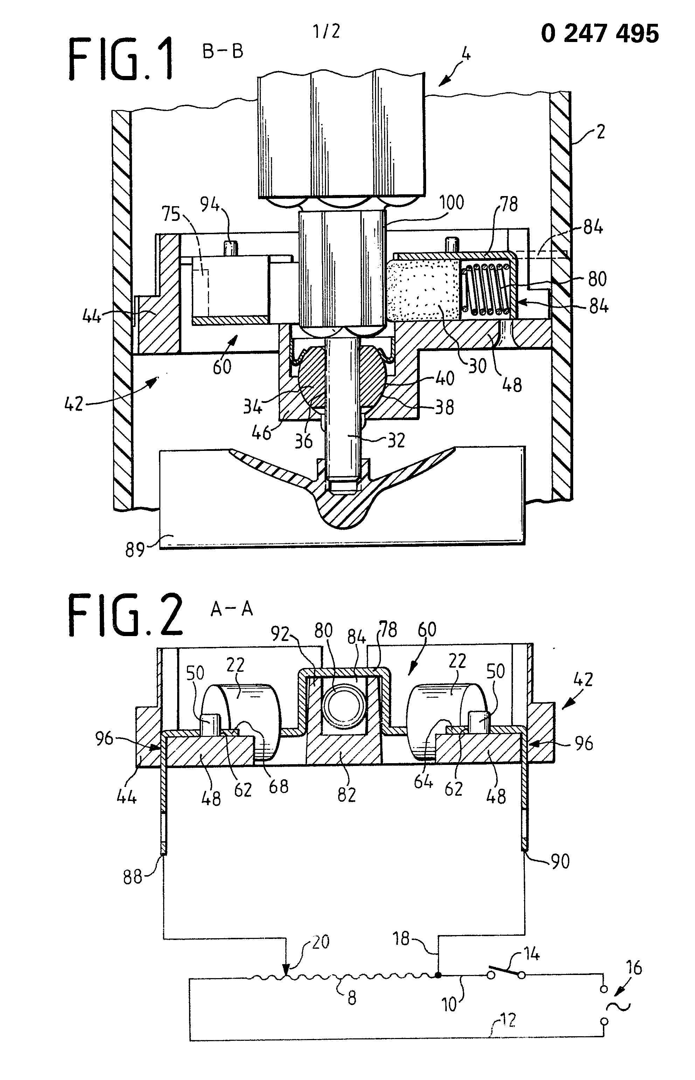

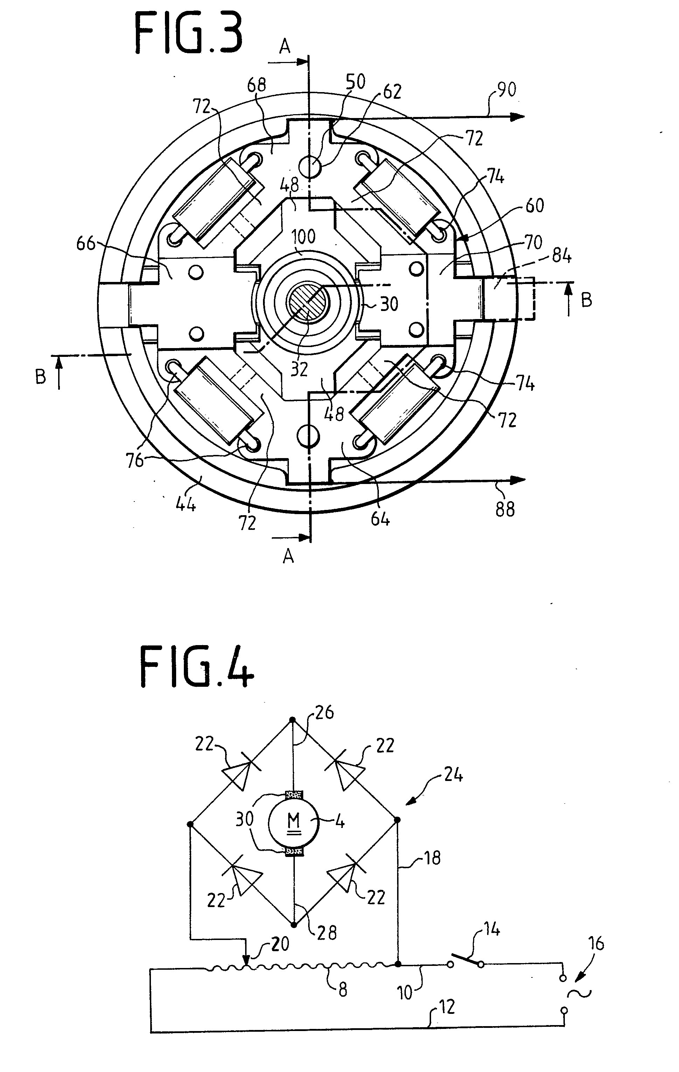

In der Zeichnung ist mit 2 ein Gehäuse beispielsweise eines Haartrockners bezeichnet. Das in Fig. 1 dargestellte Gehäuse 2 kann auch als Gehäuse für eine Munddusche oder für ein anderes elektrisches Gerät, insbesondere für den persönlichen Bedarf, vorgesehen sein, das mit einem Gleichstrommotor 4 ausgerüstet ist. Eine lediglich in Fig. 2 und 4 schematisch dargestellte Heizung 8 ist über elektrische Leitungen 10 und 12 an einen Netzstecker 16 anschließbar. In die elektrische Leitung 10 ist ein Ein- und Ausschalter 14 eingebaut. Die elektrische Heizung 8 kann beispielsweise mit einer Wechselspannung von 220 Volt betrieben werden. Wie aus Fig. 4 hervorgeht, ist an die Eingangsseite der Heizung 8 eine elektrische Leitung 18 und ein Abgriff 20 angeschlossen, die

...

0 247 495
05261 PT5/Do
07.05.1986

mit einer vier Dioden 22 aufweisenden Brückenschaltung 24 verbunden sind. Über die Brückenschaltung 24 fließt dem Elektromotor 4 Gleichstrom zu. Die Leistung des Gleichstrommotors 4 kann für ca. 20-60 Watt ausgelegt sein. Hierzu wird der Abgriff 20 an einer entsprechenden Stelle zwischen der Eingangs- und Ausgangsseite der Heizung 8 angeschlossen. Die Brückenschaltung 24 ist über zwei Leitungen 26 und 28 und je eine Kohle 30 mit dem Gleichstrommotor 4 verbunden. Die in Fig. 4 dargestellte Verdrahtung und Anordnung des Gleichstrommotors 4 ist in den Figuren 1 und 2 näher veranschaulicht.

Wie aus Fig. 1 hervorgeht, lagert der Gleichstrommotor 4 einenends mittels einer Welle 32 in einem einstellbaren Lager 34, das hierzu mit einer zylindrischen Bohrung 36 und einer balligen Oberfläche 38 versehen ist. Das Lager 34 ist in einer Lagerschale 40 aufgenommen und kann sich in einem bestimmten Bereich allseitig bewegen, so daß der Gleichstrommotor 4 optimal im Gehäuse 2 ausgerichtet werden kann. Das andere in der Zeichnung nicht dargestellte Ende der Welle 32 des Gleichstrommotors 4 ist auf ähnliche Weise im Gehäuse 2 gelagert.

Die Lagerschale 40 zur Aufnahme des einstellbaren Lagers 34 befindet sich in einem Lagerschild 42, das an seinem Außenumfang in der Zeichnung nicht dargestellte Rastelemente aufweist, die in entsprechende im Gehäuse 2 vorgesehene Gegenstücke einrastbar sind. Das Lagerschild 42 besteht aus einem Ringkörper 44 und einem koaxial zum Ringkörper 44 angeordneten Lagergehäuse 46, in dem die ballige Lagerschale 40 vorgesehen ist, die zur Aufnahme des Lagers 34 dient. Das Lagergehäuse 46 ist über vier kreuzarmig angeordnete Stege 48 mit der Innenseite des Ringkörpers 44 fest verbunden. Die Stege 48 weisen sich in axialer Richtung erstreckende kleine Zapfen 50 auf, die sich durch in einem Träger 60 vorgesehene Bohrungen 62 erstrecken und somit den koaxial

...

05261 PT5/Do
07.05.1986

im Lagerschild integrierten Träger fixieren. Die Zapfen 50 können
nach Einbau des Trägers 60 in dem Lagerschild 42 durch Ultraschall oder auf andere Weise insbesondere an ihren oberen Enden
so verformt werden, daß sie eine feste Verbindung zwischen dem
Träger 60 und dem Lagerschild 42 herstellen. Der Träger 60 besteht aus jeweils zwei diametral gegenüberliegenden Blechteilen
bzw. Platten 64-70, die über vier Stege 72 miteinander verbunden
sind. Eine jede Platte 64-70 weist zwei Bohrungen 74 auf, in die
die Leitungen 76 der Dioden 22 eingeführt werden und mit der
Platte verlötet werden können. Da die Platten 64-70 alle fest
miteinander verbunden und in einer Ebene angeordnet sind, lassen
sich die Dioden 22 auf relativ einfache Weise schnellstens montieren. Nach dem die Dioden 22 mit den Platten 64-70 verlötet
worden sind, können die Stege 72 getrennt werden, da nunmehr die
Dioden die Funktion der Stege übernehmen und die einzelnen Platten zusammenhalten. Das Durchstoßen der Stege 72 kann in vorteilhafter Weise auch dann vorgenommen werden, wenn der Träger 60 bereits in das Lagerschild 42 eingebaut ist. Alternative Befestigungsmöglichkeiten der Dioden bestehen darin, die Dioden abzulängen, die Diodenanschlüsse in muldenförmige Ausformungen an den
Platten einzubringen und eine stabile Verbindung durch Löten,
Klemmen oder Schweißen herzustellen.

Es liegt im Rahmen der Erfindung, statt herkömmlichen mit zwei
Drahtanschlüssen versehenen Dioden auch Dioden in Form von Einzelhalbleitern oder Chips nach bekannten Techniken direkt auf dem
Träger 60 durch Bonden oder Löten zu befestigen und eventuell
nachträglich mit einer schützenden Umhüllung zu versehen. Hierzu
kann beispielsweise der Chip bzw. Kristall im Bereich einer der
nicht mehr erforderlichen Bohrungen 74 der Platten 64-70 angeordnet und über einen Draht oder ähnliches eine Verbindung zum Bereich der anderen, nicht mehr erforderlichen Bohrung 74 der

...

Platten 64-70 hergestellt werden. Danach werden ähnlich wie beim Einsatz von herkömmlichen Dioden die Stege getrennt und die Chips bzw. Kristalle mit einer Umhüllung umgeben.

Wie durch die gestrichelten Linien 75 in Fig. 1 und 3 für einen Teil des Trägers 60 angedeutet ist, sind die Aufnehmungen für die Dioden 22 in einer vorteilhaften Ausgestaltung wenigstens im angrenzenden Bereich zu den Gehäusen 78 an federnde Elemente angeordnet. Hierzu ist in dem durch die gestrichelten Linien 75 angedeuteten Bereich eine schlitzförmige Ausnehmung (Fig. 1) bzw. eine Aussparung in den Platten vorgesehen. Durch diese Maßnahme der federelastischen Befestigung wenigstens eines Leitungsanschlusses einer jeden Diode 22 am Träger 60 wird dem Auftreten von an den Dioden 22 angreifenden Kräften beim Durchtrennen der Stege 72 entgegengewirkt und eine eventuelle Beschädigung der Dioden vermieden.

Wie insbesondere aus Fig. 1 hervorgeht, liegt jeweils zwischen den beiden Bohrungen 74 der beiden diametral gegenüberliegenden Platten 66 und 70 ein U-förmig ausgebildetes Gehäuse 78 zur Aufnahme der Kohle 30 und einer Feder 80 (Fig.1,2). Das U-förmige Gehäuse 78 ist ebenfalls mit den Stegen 72 fest verbunden und wird, nachdem die Stege 72 durchstochen sind, mittels der Dioden und der Zapfen 50 in seiner Position gehalten. Zur zusätzlichen Fixierung des Gehäuses 78 dient ein ebenfalls U-förmig ausgebildetes Gehäuse 82, auf das das U-förmige Gehäuse 78 (s. Fig. 2) gestülpt ist und somit eine Kammer bildet, in die die Kohle 30 und die Feder 80 von außen her radial eingeführt werden können. Nach dem die Kohle 30 und die Feder 80 in das Gehäuse 78 und 82 eingesetzt worden sind, läßt sich ein an den Boden des Gehäuses 78 angeordneter Steg 84 rechtwinklig nach unten klappen, so daß die

...

0 247 495
05261 PT5/Do
07.05.1986

Feder 80 sich gegen den Steg 84 abstützen kann. Das Abklappen des Steges 84 kann bereits vorgenommen werden, bevor der Träger 60 in das Lagerschild 42 eingebaut worden ist. Es ist jedoch besonders vorteilhaft, den Träger 60 zuerst in das Lagerschild 42 einzusetzen, anschließend radial die Kohle 30 und die Feder 80 in das Gehäuse 78,82 einzusetzen und dann den Steg 84 rechtwinklig abzuklappen, so daß er gegen die Feder 80 zur Anlage kommt.

Nach dem die einzelnen Dioden 22, und eventuell die Kohlen 30 und die Federn 80 auf dem Träger 60 montiert worden sind, läßt sich der vormontierte Träger 60 in das Lagerschild 42 einbauen und dann in das Gehäuse 2 einsetzen und mit diesem verbinden. Anschließend wird die Welle 32 des Elektromotors 4 in die Bohrung 36 des Lagers 34 eingesetzt und auf das freie Ende mit der Welle 32 ein Lüfterrad 89 befestigt. Danach lassen sich die Anschlüsse 88 und 90 mit der Leitung 18 bzw. mit dem Abgriff 20 verbinden (s. Fig. 2).

Aus vorstehendem geht hervor, daß die einzelnen Platten 64 bis 70 sowie die Gehäuse 78 zur Aufnahme der Kohle in einem einzigen Arbeitsvorgang hergestellt werden können. Ferner wird die Montage der einzelnen Dioden 22 durch die vorteilhafte Anordnung des Trägers 60 wesentlich vereinfacht, da sie ebenfalls in einem einzigen Arbeitsvorgang auf dem Träger montiert und verlötet werden können, bevor der Träger 60 gemeinsam mit dem Lagerschild 42 im Gehäuse 2 des Haartrockners bzw. eines anderen elektrischen Gerätes für den persönlichen Bedarf befestigt wird. Hierdurch lassen sich die Montagekosten insgesamt reduzieren und eine Verbilligung des Gerätes herbeiführen. Durch die auf dem Lagerschild bzw. den Stegen vorgesehenen verformbaren Zapfen 50 erhält man eine gute Sicherung des Trägers 60 im Lagerschild 42. Zusätzlich können

...

un Form 10.407/1-10/83

auch auf den Seitenwänden 92 des Gehäuses 82 sich axial erstrekkende Zapfen vorgesehen werden, die in entsprechende Bohrungen
der Platte bzw. des Gehäuses 78 einrastbar und anschließend wie
die Zapfen verformbar sind. Um das Einführen des Trägers 60 in
das Lagerschild 42 zu vereinfachen, werden die beiden Anschlüsse 88 und 90 durch im Lagerschild vorgesehene Schlitze 96 gesteckt. Hierdurch wird ferner sichergestellt, daß der Träger
seine richtige Lage im Lagerschild 42 einnimmt. Ferner wird dadurch auch eine gute Abstützung der einzelnen Platten 64 und 70
gewährleistet, wenn die Stege 72 durchstoßen sind.

Wie insbesondere aus Fig. 1 hervorgeht, liegen die Kohlen 30 gegen einen Kollektor 100 des Elektromotors 4 an, wobei die Dioden 22 den Kollektor koaxial umgeben. Dabei sind die einzelnen
Dioden 22 in vorteilhafter Weise in den Aussparungen vorgesehen,
die zwischen den Stegen 48 und dem Ringkörper 44 gebildet sind.
Hierdurch erhält man eine sehr platzsparende Anordnung für die
Dioden, so daß diese nicht, wie bisher, an anderer Stelle im
Gehäuse 2 untergebracht werden müssen.

...

0 247 495
05261 PT5/Do
07.05.1986

Patentansprüche

1. Elektrisches Gerät, insbesondere für den persönlichen Bedarf, mit einem in einem Gehäuse (2) gelagerten, über Gleichstrom betreibbaren, ein Lagerschild (42) aufweisenden Elektromotor (4), der über auf einem Träger (60) angeordnete Dioden (22) mittel- oder unmittelbar an ein Wechselstromnetz anschließbar ist, dadurch gekennzeichnet, daß der Träger (60) in das Lagerschild (42) integrierbar und gleichzeitig zur Aufnahme der Dioden (22) oder der Dioden (22) und einer Kohle (30) für den Elektromotor (4) ausgebildet ist.

2. Gerät nach Anspruch 1, dadurch gekennzeichnet, daß die Dioden (22) zumindest Teile des Elektromotors (4) koaxial umgeben.

3. Gerät nach Anspruch 1, dadurch gekennzeichnet, daß die Dioden (22) und die Kohlen (30) in einer Ebene angeordnet sind.

4. Gerät nach einem oder mehreren der vorhergehenden Ansprüche, dadurch gekennzeichnet, daß das Lagerschild (42) aus einem nichtleitenden, im wesentlichen ringförmigen Körper (44) besteht, in den der metallische Träger (60) koaxial einsetzbar ist, der als vormontierbare Baugruppe ausgebildet ist.

5. Gerät nach Anspruch 4, dadurch gekennzeichnet, daß der Träger (60) vier über Stege (72) miteinander verbundene Platten bzw. Blechteile (64-70) mit Aufnehmungen, insbesondere Bohrungen (74) aufweist, in die Leitungen (76) der Dioden (22) einsteckbar und in einem Arbeitsgang verlötbar, verschweißbar oder verklemmbar sind.

...

0 247 495

05261 PT5/Do
07.05.1986

6. Gerät nach Anspruch 4, dadurch gekennzeichnet, daß zwei Platten (66,70) Teil je eines U-förmig ausgebildeten Gehäuses (78) sind, in dem die Kohle (30) und eine Feder (80) vormontierbar sind, wobei der Boden des Gehäuses (78) einen seitlich herausstehenden Steg (84) aufweist, der nach Einsetzen der Kohle und der Feder um ca. 90° abwinkelbar ist und als Anlage für die Feder dient.

7. Gerät nach einem oder mehreren der vorhergehenden Ansprüche, dadurch gekennzeichnet, daß jeweils zwei Platten (64,68) und jeweils zwei Gehäuse (78) mit den zugehörigen Platten (66,70) diametral gegenüberliegen und in Aussparungen des Lagerschildes (42) einsetzbar sind.

8. Gerät nach Anspruch 7, dadurch gekennzeichnet, daß ein jedes U-förmige Gehäuse (78) des Trägers (60) bei Einbau in das Lagerschild (42) über ein im Lagerschild angeordnetes U-förmiges Gehäuse (82) gestülpt wird und somit eine innen offene Kammer zur Aufnahme der Kohle (30) und der Feder (80) bildet.

9. Gerät nach Anspruch 4, dadurch gekennzeichnet, daß das Lagerschild (42) aus dem Ringkörper (44) und einem koaxial angeordneten Lager (34) zur Aufnahme des Kollektors (100) des Elektromotors (4) besteht, wobei das Lager (34) über kreuzartig angeordnete Stege (48) mit dem Ringkörper (44) fest verbunden ist.

10. Gerät nach Anspruch 11, dadurch gekennzeichnet, daß die Stege (48) sich axial zur Längsachse des Elektromotors (4) erstreckende kleine Zapfen (50) aufweisen, die in, in den Platten (64 bis 70) vorgesehenen Bohrungen (62) einsteckbar sind.

...

11. Gerät nach einem oder mehreren der vorhergehenden Ansprüche, <u>dadurch gekennzeichnet,</u> daß die Stege (72) zur Verbindung der nebeneinander angeordneten Platten (64-70) nach der Montage der Dioden (22) durchtrennt werden, wobei die Dioden zumindest zum Teil die Tragfunktion der Stege (72) übernehmen.

12. Gerät nach Anspruch 11, <u>dadurch gekennzeichnet,</u> daß die Längsachse der Dioden (22) in etwa parallel zur Längsachse der Stege (72) verläuft.

13. Gerät nach einem oder mehreren der vorhergehenden Ansprüche, <u>dadurch gekennzeichnet,</u> daß an zwei gegenüberliegenden Platten (64,68) rechtwinklig abgewinkelte Stege bzw. Anschlüsse (88,90) für elektrische Eingänge vorgesehen sind, die durch im Lagerschild (42) vorgesehene Aussparungen durchsteckbar sind.

14. Gerät nach Anspruch 4, <u>dadurch gekennzeichnet,</u> daß die Dioden (22) in Öffnungen angeordnet sind, die durch die kreuzartig angeordneten Stege (48) und den Ringkörper (44) des Lagerschildes (42) gebildet sind.

15. Gerät nach Anspruch 11, <u>dadurch gekennzeichnet,</u> daß wenigstens eine Aufnehmung für eine Leitung (76) einer jeden Diode (22) am Träger (60) federelastisch angeordnet ist.

FIG.1  B-B        1/2        0 247 495

FIG.2  A-A

# FIG.3

# FIG.4